# FASCICULE DE BREVET EUROPEEN

(11) **EP 3 643 609 B1**
(45) Date de publication et mention de la délivrance du brevet: **19.04.2023**
(21) Numéro de dépôt: 19203020.3
(22) Date de dépôt: 14.10.2019
(51) Int. Cl.: B64C 27/82, F01D 5/30

(54) **SYSTÈME CARÉNÉ ET AERONEF**
STROMLINIENFÖRMIGES SYSTEM UND LUFTFAHRZEUG
HULL SYSTEM AND AIRCRAFT

(30) Priorité: 26.10.2018 FR 1801135
(43) Date de publication de la demande: 29.04.2020
(60) Demande divisionnaire: 22158016.0
(73) Titulaire: Airbus Helicopters, 13725 Marignane Cedex (FR)
(72) Inventeur: SERR, Christophe, 13109 Simiane-Collongue (FR); JALAGUIER, Jean-Pierre, 13127 Vitrolles (FR)
(74) Mandataire: GPI & Associés

(56) Documents cités:
- EP-A1- 0 680 871
- US-A- 5 306 119

## Description

La présente invention concerne un système caréné et un aéronef à voilure tournante muni de ce système caréné. Un tel système caréné est souvent dénommé « rotor caréné »

Un tel véhicule peut être un véhicule terrestre, maritime ou aérien. Par exemple, le véhicule peut comprendre une voilure tournante. L'invention appartient ainsi au domaine technique des rotors carénés notamment pour giravion, et par exemple des rotors arrière d'hélicoptère.

Usuellement un hélicoptère est muni d'un rotor assurant au moins partiellement sa sustentation et sa propulsion. En raison de cette fonction, un tel rotor est dénommé « rotor principal ». Ce rotor principal peut être entraîné par une boîte de transmission de puissance mise en mouvement par au moins un moteur. Lors de sa rotation, le rotor principal induit un couple rotor sur le fuselage de l'hélicoptère. Ce couple rotor tend alors à générer un mouvement giratoire du fuselage autour d'un axe de lacet. Par conséquent, un aéronef ayant une voilure tournante est usuellement pourvu d'un dispositif pour contrôler son mouvement en lacet.

Un tel dispositif peut comprendre un rotor auxiliaire agencé à l'arrière de l'hélicoptère. Ce rotor auxiliaire exerce une poussée ayant au moins une composante transversale pour pouvoir contrer le couple rotor et contrôler le mouvement en lacet de l'aéronef. Dès lors, ce rotor auxiliaire est dénommé parfois « rotor arrière » en raison de son agencement, ou encore « rotor anticouple » en raison de sa faculté à contrer le couple rotor généré par le rotor principal sur le fuselage. L'expression « rotor arrière » est notamment utilisée par la suite.

Pour contrôler le mouvement en lacet de l'aéronef, un pilote contrôle le pas collectif des pales du rotor arrière. La modification de ce pas collectif induit en effet une modification de la poussée générée par le rotor arrière. Par exemple, un pilote manoeuvre un palonnier relié au rotor arrière pour commander le mouvement de l'aéronef autour de son axe de lacet.

Le rotor arrière peut être un rotor arrière caréné, par exemple un rotor arrière caréné connu sous l'expression « Fenestron ».

Un rotor caréné comporte une carène. Cette carène est une partie constitutive par exemple d'une dérive sur un hélicoptère. En outre, le rotor caréné comporte un rotor en tant que tel agencé dans une veine de cette carène. Ce rotor est pourvu d'un moyeu portant des pales qui effectuent une rotation au sein de la carène autour d'un axe d'entraînement.

Selon le document FR 2699497, chaque pale peut comporter une partie courante profilée et un pied de pale aménagé en manchon. Le pied de pale est équipé d'un levier de commande pas. De plus, le rotor caréné comporte un plateau de commande portant une patte par pale, les pattes axiales étant identiques. Chaque patte comporte un perçage pour être reliée à un levier de commande de pas par une liaison à rotule. Le levier de pas peut être positionné au niveau du bord d'attaque ou du bord de fuite de la pale. Par exemple, une telle liaison à rotule comporte une rotule disposée dans le perçage d'une patte et un goujon à tête. Le goujon à tête comporte une tête et une tige à extrémité filetée. Dès lors la tête est maintenue contre la rotule, éventuellement via une goupille, et la tige filetée traverse la rotule et le levier de commande de pas pour être vissée à un écrou. Le plateau de commande est relié à au moins une commande dénommée organe de commande par la suite. Par exemple, un tel organe de commande comprend un organe manoeuvrable par un pilote humain ou un pilote automatique relié au plateau de commande via une chaîne mécanique. Le plateau de commande est libre en rotation avec les pales autour de l'axe d'entraînement du rotor caréné et présente une position longitudinale le long de cet axe d'entraînement qui est réglable à l'aide de l'organe de commande. Un mouvement de l'organe de commande induit une translation du plateau de commande qui provoque alors une rotation identique de chaque pale.

De plus, le rotor caréné comprend des éléments fixes dans la veine susceptible d'être impactés par un écoulement d'air provenant du rotor. Par exemple, des aubes d'un stator redresseur et/ou un mât portant le rotor sont agencés dans la veine de la carène.

Selon une première réalisation, les pales peuvent être équiréparties azimutalement, identiques et avoir des pas identiques à chaque instant. Un rotor caréné de ce type est susceptible d'émettre un sifflement par interaction entre le flux d'air traversant la veine et les éléments fixes. Un tel rotor est parfois qualifié de rotor non modulé.

Selon une deuxième réalisation, un rotor caréné peut être muni de pales qui ne sont pas azimutalement équiréparties, l'angle séparant deux pales adjacentes n'étant pas constant d'une pale à certaines autres pales. Un tel rotor est parfois qualifié de rotor modulé. Les pales sont identiques et ont des pas identiques à chaque instant. Chaque pale séparée angulairement de ces deux pales adjacentes par deux angles importants est dite « pale isolée » par commodité. A l'inverse, chaque pale séparée angulairement d'au moins une pale adjacente par un angle faible est dite « pale groupée » par commodité et par opposition à la notion de « pale isolée ».

A un même azimut et pour une même position longitudinale du plateau de commande le long de l'axe d'entraînement, les pales isolées et groupées présentent le même pas mais ne génèrent pas la même portance en raison de la répartition azimutale des pales. En effet, cette répartition particulière induit des incidences différentes des pales par rapport au vent relatif et donc des portances différentes malgré des pas identiques. En particulier, à un même azimut et pour une même position longitudinale du plateau de commande, les pales isolées subissent chacune une portance supérieure à la portance subie par chaque pale groupée. Certaines pales isolées peuvent à titre illustratif subir une portance supérieure de 20% à une portance moyenne des pales pour une position particulière du plateau de commande, et certaines pales groupées peuvent subir une portance inférieure de 20% à la portance moyenne à cette position particulière du plateau de commande.

Dès lors, le rotor peut être dimensionné pour supporter notamment les conséquences des portances élevées exercées sur les pales isolées. Ce dimensionnement peut avoir un impact massique voire financier.

De plus, le flux d'air traversant la veine peut présenter une survitesse à proximité des pales isolées. Cette survitesse est susceptible d'avoir un impact négatif d'un point de vue acoustique.

Le document US8967525 décrit un rotor caréné ayant des pales qui ne sont pas azimutalement équiréparties.

Le document WO 20006/110156 décrit un rotor caréné ayant des pales et des aubes de redresseur qui ne sont pas azimutalement équiréparties.

Le document US 5306119 décrit un rotor caréné ayant des pales qui ne sont pas azimutalement équiréparties. Chaque pale est relié à un plateau de commande du pas par une liaison glissière.

Le document EP 0680871 présente aussi un rotor caréné ayant des pales qui ne sont pas azimutalement équiréparties.

Le document EP0508026 décrit une structure munie d'un rotor arrière caréné incliné.

La présente invention a alors pour objet de proposer un rotor caréné innovant tendant à s'affranchir des limitations mentionnées ci-dessus.

L'invention concerne ainsi un système caréné muni d'une carène selon la revendication 1.

L'invention vise aussi des procédés de fabrication d'un système caréné muni d'une carène selon les revendications 13 et 14.

D'autres modes de réalisation de l'invention sont définis par les revendications dépendantes.

L'invention et ses avantages apparaîtront avec plus de détails dans le cadre de la description qui suit avec des exemples donnés à titre illustratif en référence aux figures annexées qui représentent :
- la figure 1, une vue d'un aéronef muni d'un système caréné selon l'invention,
- la figure 2, une vue d'un rotor muni de pales non équiréparties en azimut,
- les figures 3 et 4, des vues de pales de rotors selon l'invention,
- la figure 5, une coupe d'un rotor selon l'invention,
- la figure 6, une vue éclatée d'un rotor selon l'invention,
- la figure 7, une illustration de pattes axiales différentes selon l'invention,
- les figures 8 et 9, des vues illustrant des pales ayant des leviers de pas différents selon l'invention,
- la figure 10, un diagramme illustrant le fonctionnement de rotors selon l'art antérieur pour un rotor modulé, et
- la figure 11, un diagramme illustrant au contraire le fonctionnement de rotors pour un rotor modulé selon l'invention.

Les éléments présents dans plusieurs figures distinctes sont affectés d'une seule et même référence.

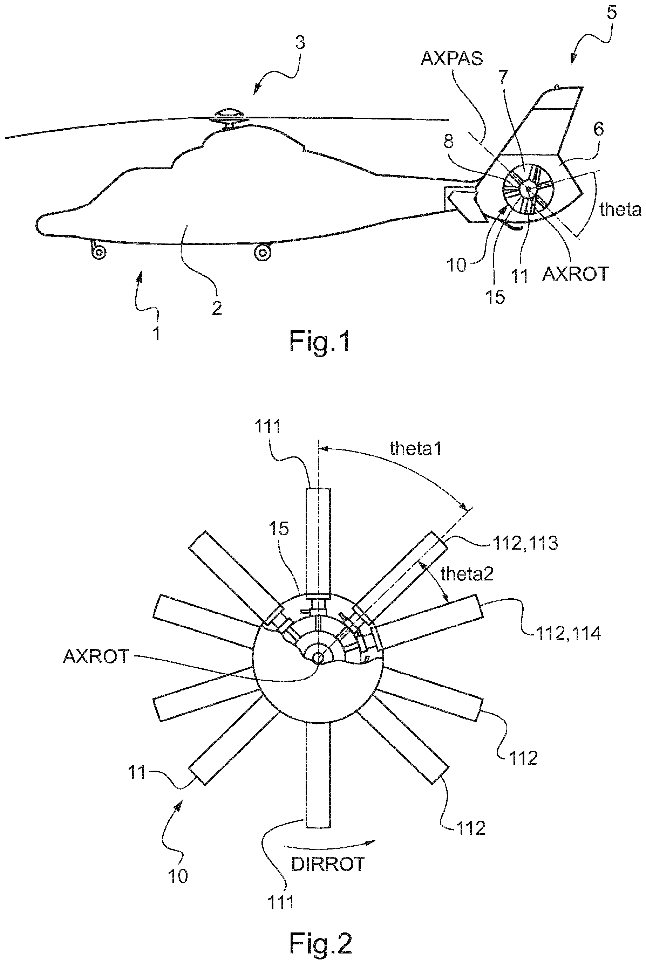

La figure 1 illustre schématiquement un véhicule comprenant un système caréné 5 selon l'invention. Selon l'exemple donné, le véhicule peut être un aéronef 1 ayant une voilure tournante 3 portée par une cellule 2. Toutefois, le système caréné et en particulier les liaisons mécaniques distinctes de l'invention peuvent être agencés sur d'autres types de véhicules, un navire voire un sous-marin par exemple, voire d'autres objets tels qu'un ventilateur par exemple.

Indépendamment de son implantation, le système caréné comprend une carène 6. Par exemple, la carène est une partie d'une dérive sur un hélicoptère. La carène entoure une veine 7 dans laquelle s'écoule un flux d'air.

De plus, le système caréné comporte un rotor 10 agencé dans la veine 7. En raison du placement d'un rotor dans une carène, un tel système caréné est parfois dénommé « rotor caréné ». Le rotor 10 est mobile en rotation par rapport à la carène 6 dans la veine 7 autour d'un axe d'entraînement AXROT.

En outre, le rotor 10 comporte plusieurs pales 11. Chaque pale 11 est montée sur un moyeu 15, les pales 11 et le moyeu 15 étant mobiles conjointement en rotation autour de l'axe d'entraînement AXROT. Chaque pale 11 présente au moins un degré de liberté par rapport au moyeu 15, et notamment un degré de liberté en rotation autour d'un axe de pas AXPAS qui lui est propre. Dès lors, chaque pale peut tourner autour de son axe de pas, l'angle de pas représentant classiquement un angle entre une position courante de la pale et une position de référence.

Selon la réalisation de la figure 1, les pales 11 sont équiréparties en azimut au regard de l'axe d'entraînement AXROT. Par suite, deux pales adjacentes sont toutes séparées par un même angle theta. Par exemple, sur un rotor à six pales, deux pales adjacentes sont sensiblement séparées par un angle de 60 degrés.

A l'inverse, selon la réalisation de la figure 2, les pales 11 sont réparties différemment en azimut au regard de l'axe d'entraînement AXROT. Deux pales adjacentes sont séparées par un angle theta1 différent de l'angle theta2 séparant deux autres pales adjacentes. Chaque pale séparée angulairement de ces deux pales adjacentes par deux angles supérieurs à un seuil est une pale isolée 111. A l'inverse, chaque pale séparée angulairement d'au moins une pale adjacente par un angle inférieur ou égal au seuil est une pale groupée 112. Par exemple, le rotor de la figure 2 peut comprendre deux pales isolées 111 et huit pales groupées 112.

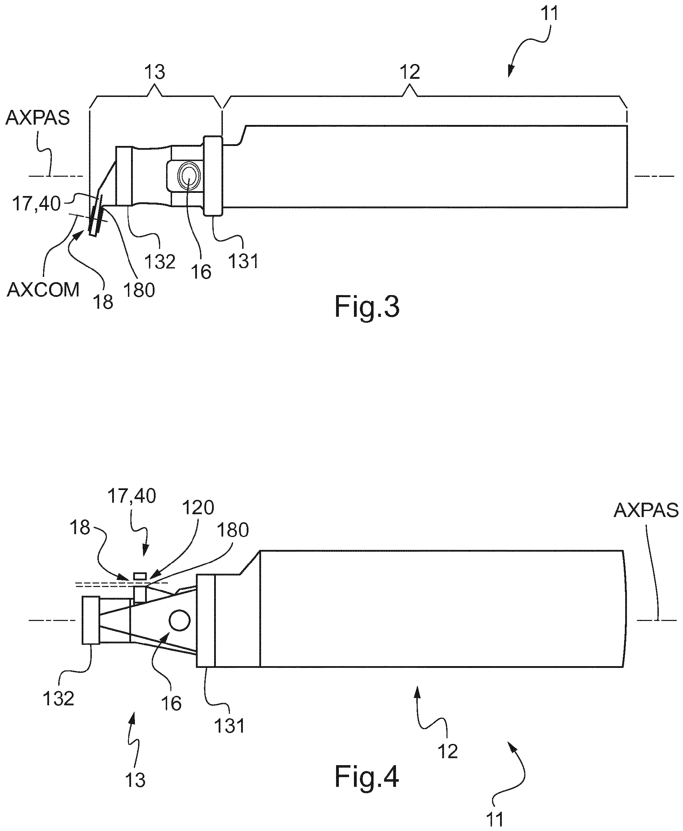

Les figures 3 et 4 illustrent des pales selon diverses versions.

Quelle que soit la version et en référence à la figure 3, chaque pale comporte une partie courante dénommée surface courante 12 prolongée par un pied 13. La surface courante et le pied peuvent former une seule et même pièce ou peuvent être fixés l'un à l'autre. La surface courante 12 présente des sections ayant des profils aérodynamiques. Le pied 13 est muni de moyens pour articuler la pale au moyeu. Ainsi, le pied 13 peut présenter un manchon comprenant au moins une collerette 131, 132. Par exemple, le pied peut comprendre une collerette externe 131 au niveau de son interface avec la surface courante 12 puis une collerette interne 132, la collerette externe 131 étant agencée entre la collerette interne 132 et la surface courante selon une direction qui s'étend selon l'envergure de la pale 11. De plus, le pied peut éventuellement comprendre au moins un perçage 16 pour être fixé à une extrémité d'un faisceau torsible. En outre, le pied comprend un levier de pas 17 d'une liaison mécanique 40. Ce levier de pas 17 peut former une seule et même pièce avec un manchon du pied par exemple ou peut être fixé par des moyens usuels au manchon et par exemple des moyens de vissage. Le levier de pas présente un orifice 18 décalé par rapport à l'axe de pas AXPAS de la pale et est solidaire en rotation autour de l'axe de pas AXPAS de la surface courante. Une rotation du levier de pas autour de l'axe de pas AXPAS entraîne une rotation identique de la surface courante. Une distance radiale sépare alors l'orifice 18 et l'axe de pas AXPAS. Cette distance radiale peut par exemple être la plus petite distance séparant l'axe de pas AXPAS de la pale et un bord de l'orifice ou la plus petite distance séparant l'axe de pas AXPAS de la pale et un axe de commande AXCOM formant un axe de symétrie d'un l'orifice 18 lorsque cet orifice 18 a une forme cylindrique à base circulaire.

Selon la figure 3 le levier de pas s'étend selon une direction qui n'est pas perpendiculaire à l'axe de pas, contrairement à la version de la figure 4.

Par ailleurs, les figures 3 et 4 illustrent diverses variantes de positionnement du levier de pas. Selon la figure 3 le levier de pas peut être s'étendre du bord d'attaque de la pale alors que selon la figure 4 le levier de pas peut être s'étendre du bord de fuite de la pale.

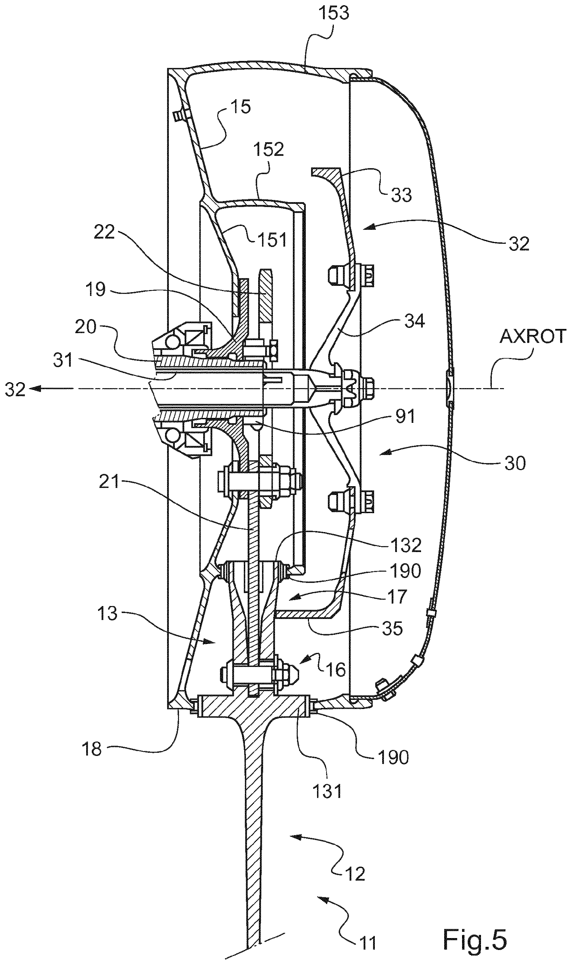

Quelle que soit la réalisation et la forme du levier de pas, la figure 5 illustre un exemple de rotor selon l'invention. D'autres exemples sont envisageables sans sortir du cadre de l'invention.

Le moyeu 15 peut comprendre un anneau 151 qui s'étend sensiblement radialement par rapport à l'axe d'entraînement AXROT. Cet anneau 151 est solidarisé à un arbre d'entraînement 20 par des moyens usuels. Par exemple, l'anneau 151 est vissé à une bride 19, cette bride 19 ayant des cannelures en prise sur des cannelures de l'arbre d'entraînement 20. Un écrou 91 peut immobiliser axialement la bride 19 selon l'axe d'entraînement AXROT par rapport à l'arbre d'entraînement.

Le moyeu 15 peut aussi comprendre un ou plusieurs supports solidaires de l'anneau 151, le ou les supports formant éventuellement une seule et même pièce mécanique avec l'anneau. Par exemple, chaque support présente une paroi 152, 153 qui s'étend sensiblement parallèlement à l'axe d'entraînement AXROT à partir de l'anneau, chaque paroi présentant une découpe par pale. La figure 5 illustre un moyeu ayant une paroi interne 152 et une paroi externe 153.

Chaque pale 11 est alors portée par ce moyeu, en particulier par son pied. Ainsi, chaque collerette 131,132 d'un pied est agencée dans une découpe d'une paroi 152, 153, un palier 190 étant interposé entre chaque paroi 152, 153 et la collerette 131,132 disposée dans la découpe de cette paroi 152, 153. Chaque palier 190 peut permettre à la pale associée de tourner autour de son axe de pas voire peut laisser à la pale une liberté de mouvement en battement et en traînée. Chaque pied peut être agencé dans un espace interne du moyeu, à l'exception par exemple d'une portion de la collerette externe 131. Le terme pied peut désigner une portion de la pale principalement agencée dans le moyeu.

Par ailleurs, le pied d'une pale est par exemple fixé à une première extrémité d'un faisceau torsible 21. Le faisceau torsible 21 est solidarisé en rotation autour de l'arbre d'entraînement AXROT. Par exemple, un boulon traverse successivement l'anneau 151 du moyeu, la bride 19, la deuxième extrémité et une autre bride 22.

Les surfaces courantes des pales et / ou les pieds des pales peuvent être identiques.

Selon un autre aspect, le système caréné 5 comprend un dispositif de modification 30 collectif du pas des pales pour modifier le pas des pales de la même manière. Un tel dispositif de modification 30 collectif du pas des pales est dénommé plus simplement « dispositif de modification 30 ».

Ce dispositif de modification 30 comporte un plateau de commande 32 ayant un degré de liberté en rotation autour de l'axe d'entraînement AXROT afin d'effectuer un mouvement de rotation conjointement avec le moyeu 15 et les pales 11 autour de l'axe d'entraînement AXROT. De plus, le plateau de commande 32 est mobile en translation par rapport au moyeu 15 et aux pales 11 le long de l'axe d'entraînement AXROT. A cet effet, le plateau de commande peut être solidarisé à une tige de commande 31 par des moyens usuels, éventuellement des moyens de vissage. La tige de commande est alors reliée à un organe de commande 32 non visible sur la figure 1, en traversant éventuellement l'arbre d'entraînement 20. Par exemple, le plateau de commande peut être relié à une chaîne mécanique comprenant au moins un organe de commande apte à déplacer le plateau de commande. Un tel organe de commande peut être organe manoeuvrable par un pilote humain ou automatique tel que par exemple un palonnier ou un vérin.

Par ailleurs, le plateau de commande 32 peut comporter une ou plusieurs pièces mécaniques. L'exemple de la figure 5 illustre un plateau de commande ayant un corps central 34 inscrit dans un corps externe 33. Selon un exemple, le corps central 34 peut comprendre une étoile et le corps externe peut comprendre un anneau solidaire des bras de l'étoile. Cet anneau peut être amovible ou intégré aux bras de l'étoile.

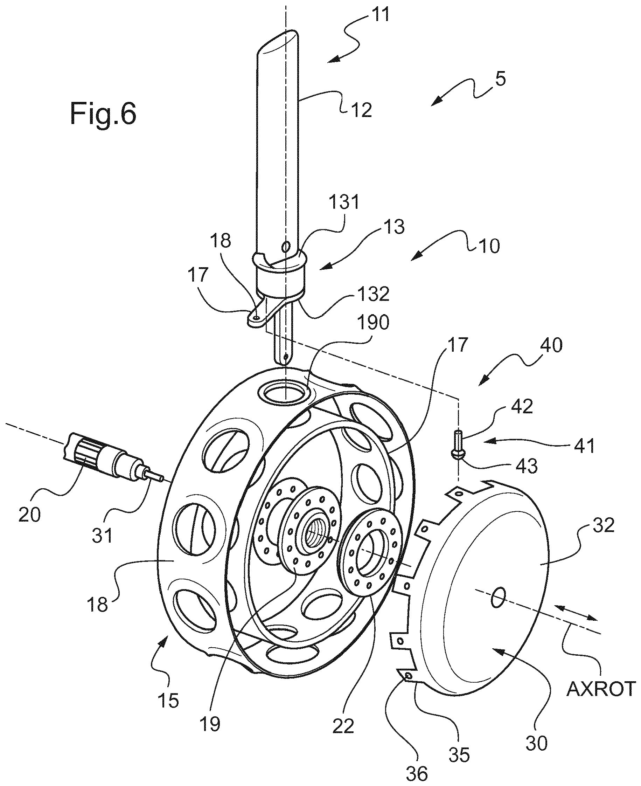

Selon l'exemple de la figure 6, le plateau de commande est monobloc. L'expression plateau de commande désigne ainsi une structure mobile en translation et apte à engendrer des rotations simultanées de toutes les pales voire identiques selon la réalisation.

Dès lors et indépendamment de la structure du plateau de commande, le système caréné 5 comporte pour chaque pale 11 une liaison mécanique 40 qui relie le plateau de commande 32 à cette pale 11.

En référence à la figure 6, chaque liaison mécanique 40 d'une pale comprend le levier de pas 17 de la pale et une patte 35 solidaire du plateau de commande 32. Les pattes 35 peuvent s'étendre sensiblement parallèlement à l'axe d'entraînement à partir du plateau de commande et/ou peuvent former une seule et même pièce avec une partie constitutive du plateau de commande.

De plus, chaque liaison mécanique comprend une liaison à rotule 41 reliant la patte 35 au levier de pas 17 de cette liaison mécanique. Par exemple la liaison à rotule comporte une rotule 43 disposée dans un passage de la patte 35, la rotule 43 étant traversée par un goujon 42 traversant aussi un orifice 18 d'un levier de pas pour être vissé à un écrou.

De manière innovante, la liaison mécanique d'au moins une des pales est différente de la liaison mécanique d'au moins une autre des pales afin qu'au moins une pale présente à chaque instant un pas différent d'au moins une autre pale, même si les pales sont identiques.

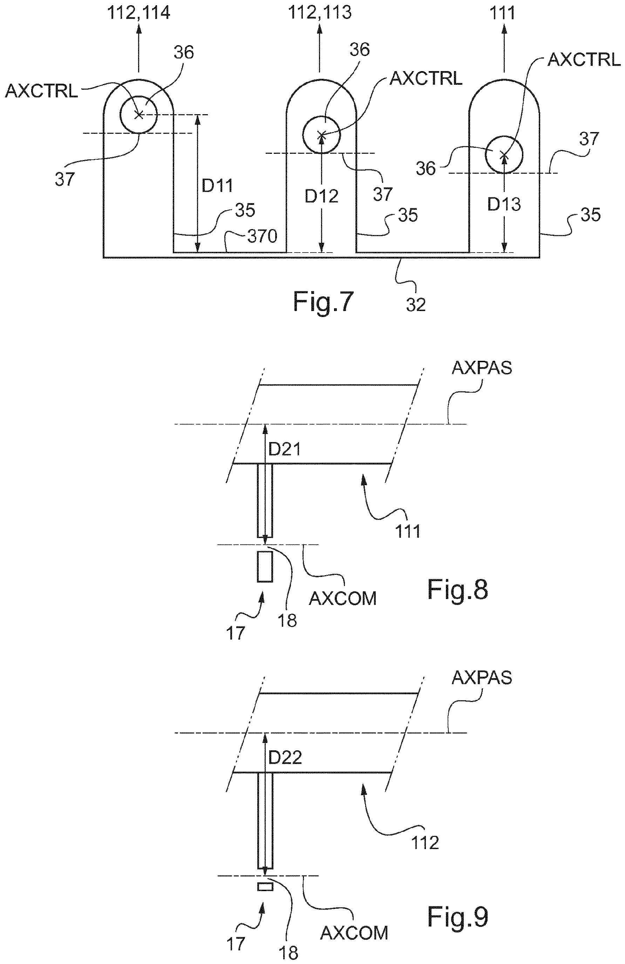

Selon la figure 7, chaque patte 35 comprenant un passage 36, une distance axiale D11, D12, D13 sépare le passage 36 d'une patte du plateau de commande 32. Cette distance axiale peut par exemple être la plus petite distance séparant un bord 37 du passage et un bord 370 du plateau de commande à partir duquel s'étend la patte. Alternativement et selon l'exemple illustré, la distance axiale peut par exemple être la plus petite distance séparant un bord 370 du plateau de commande à partir duquel s'étend la patte et un axe central AXCTRL formant un axe de symétrie du passage lorsque ce passage est circulaire.

Dès lors, au moins une patte présente une distance axiale différente d'une distance axiale d'une autre patte. Par exemple, chaque levier de pas des pales groupées 112 peut avoir une distance axiale D12, D13 supérieure à la distance axiale de chaque levier de pas des pales isolées 111. Eventuellement, certains leviers de pas de pales groupées 113 peuvent avoir une distance axiale D12, D13 inférieure à la distance axiale d'autres leviers de pas de pales groupées 114.

L'inverse est aussi possible en fonction de l'implantation du levier de pas au niveau du bord d'attaque ou du bord de fuite de la pale.

Selon une réalisation particulière, toutes les pattes peuvent être différentes. Selon une autre réalisation au moins deux pattes sont identiques.

De manière alternative et/ou complémentaire et en référence aux figures 8 et 9, au moins un levier de pas 17 peut présenter une distance radiale D21 différente d'une distance radiale D22 d'un autre levier de pas 17. Avec de tels leviers de pas distincts, une translation du plateau de commande induit des rotations différentes des pales autour de leurs axes de pas.

Ainsi, pour fabriquer un tel système caréné le procédé selon l'invention 2. comporte les étapes suivantes :
- fixation d'un objectif à atteindre,
- dimensionnement des liaisons mécaniques, la liaison mécanique d'au moins une des pales étant différente de la liaison mécanique d'au moins une autre des pales pour atteindre ledit objectif,
- fabrication du système caréné.

En permanence, au moins une pale présente un pas différent d'une autre pale en raison d'un calage différent.

Pour un rotor à pales équiréparties selon la figure 1, les liaisons mécaniques sont dimensionnées pour qu'au moins deux pales génèrent une portance différente à un même azimut pour une même position particulière du plateau de commande 32 par rapport au moyeu 15.

Pour un rotor à pales non équiréparties selon la figure 2, les liaisons mécaniques sont dimensionnées pour que les pales 11 génèrent une même portance à un même azimut pour une même position particulière du plateau de commande 32 par rapport au moyeu 15.

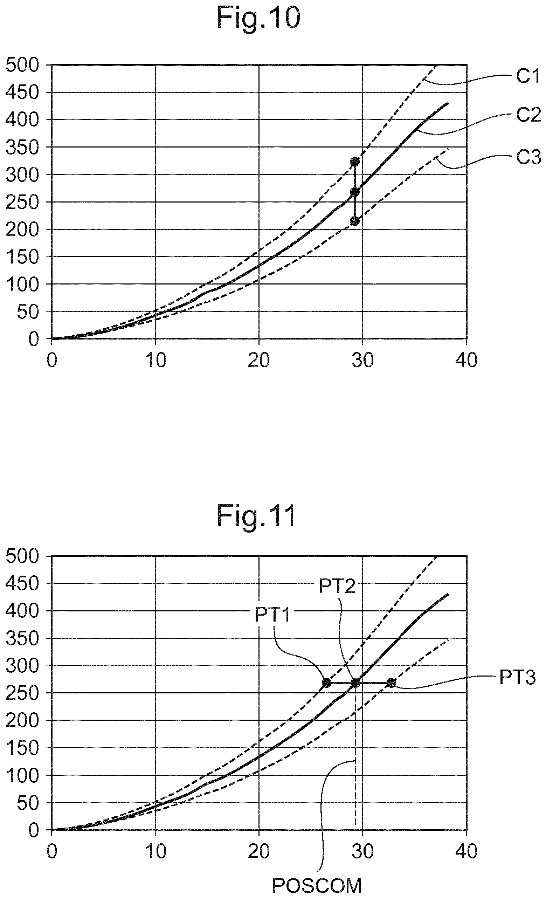

Les diagrammes des figures 10 et 11 sont utilisés pour illustrer le principe de l'invention.

En particulier, la figure 10 illustre le fonctionnement d'un rotor de l'art antérieur à pales non équiréparties. Ce diagramme présente en ordonnée une portance d'une pale et en abscisse une position de la commande. La courbe C1 illustre la portance générée par une pale isolée 111, la courbe C2 illustre la portance générée par une pale groupée 113 moyennement chargée et la courbe C3 illustre la portance générée par des pales groupées peu chargée 114. Pour une même position de la commande, ce diagramme permet de constater que les pales sont chargées différemment.

Selon la figure 11, avec l'invention, lorsque la commande est positionnée à la position particulière POSCOM, les pales tendent à être chargées de la même manière, la pale isolée ainsi que la pale usuellement moyennement chargée et la pale usuellement peu chargée fonctionnant respectivement aux points PT1, PT2 et PT3.

## Revendications

1. Système caréné (5) muni d'une carène (6), la carène (6) délimitant une veine (7), le système caréné (5) comprenant un rotor (10) disposé dans la carène (6) et mobile en rotation autour d'un axe d'entraînement (AXROT) par rapport à la carène (6), le rotor (10) comprenant plusieurs pales (11) portées par un moyeu (15), les pales (11) et le moyeu (15) étant mobiles conjointement en rotation autour de l'axe d'entraînement (AXROT) en rotation, chaque pale (11) ayant un degré de liberté en rotation par rapport au moyeu (15) autour d'un axe de pas (AXPAS) qui lui est propre, chaque pale (11) ayant une surface courante (12) profilée et un pied (13), ledit système caréné (5) comprenant un dispositif de modification (30) collectif du pas des pales, le dispositif de modification (30) collectif du pas des pales ayant un plateau de commande (32) mobile en rotation conjointement avec le moyeu (15) autour de l'axe d'entraînement (AXROT) et mobile en translation par rapport au moyeu (15) le long de l'axe d'entraînement (AXROT), le système caréné (5) comportant pour chaque pale (11) une liaison mécanique (40), chaque liaison mécanique (40) comprenant une patte (35) solidaire du plateau de commande (32) ainsi qu'un levier de pas (17) du pied (13) d'une pale (11), la liaison mécanique d'au moins une des pales étant différente de la liaison mécanique d'au moins une autre des pales, **caractérisé en ce que** chaque liaison mécanique (40) comprend une liaison à rotule (41) reliant la patte (35) au levier de pas (17), chaque patte (35) comprend un passage (36) traversé par une dite liaison à rotule (41), une distance axiale (D11, D12, D13) sépare le passage (36) de la patte du plateau de commande (32), la liaison mécanique d'au moins une des pales est différente de la liaison mécanique d'au moins une autre des pales **en ce qu'**au moins une patte présente une distance axiale différente d'une distance axiale d'une autre patte.

2. Système caréné selon la revendication 1,
**caractérisé en ce que** chaque passage (36) présente une forme circulaire centrée sur un axe de liaison (AXCTRL), ladite distance axiale (D11, D12, D13) séparant l'axe de liaison (AXCTRL) du plateau de commande (32).

3. Système caréné selon l'une quelconque des revendications 1 à 2,
**caractérisé en ce que** chaque levier de pas (17) comprend un orifice (18) traversé par une dite liaison à rotule (41), une distance radiale séparant radialement chaque orifice (18) et l'axe de pas (AXPAS) de la pale (11) munie de cet orifice (18), au moins un levier de pas (17) présente une distance radiale (D21) différente d'une distance radiale (D22) d'un autre levier de pas (17).

4. Système caréné selon la revendication 3,
**caractérisé en ce que** chaque orifice (18) présente une forme circulaire centrée sur un axe central (AXCOM), ladite distance radiale (D21, D22) séparant l'axe central (AXCOM) de l'axe de pas (AXPAS) de la pale (11) munie de cet orifice (18).

5. Système caréné selon l'une quelconque des revendications 1 à 4,
**caractérisé en ce que** les surfaces courantes des pales sont identiques.

6. Système caréné selon l'une quelconque des revendications 1 à 2 et 5,
**caractérisé en ce que** les pieds des pales sont identiques.

7. Système caréné selon l'une quelconque des revendications 1 à 6,
**caractérisé en ce que** lesdites pales (11) sont équiréparties en azimut au regard de l'axe d'entraînement (AXROT).

8. Système caréné selon l'une quelconque des revendications 1 à 6,
**caractérisé en ce que** lesdites pales (11) sont réparties différemment en azimut au regard de l'axe d'entraînement (AXROT).

9. Système caréné selon l'une quelconque des revendications 1 à 6 et 8,
**caractérisé en ce que** lesdites liaisons mécaniques (40) sont configurées pour que lesdites pales (11) génèrent une même portance à un même azimut pour une même position particulière du plateau de commande (32) par rapport au moyeu (15).

10. Système caréné selon l'une quelconque des revendications 1 à 7,
**caractérisé en ce que** lesdites liaisons mécaniques sont configurées pour qu'au moins deux pales génèrent une portance différente à un même azimut pour une même position particulière du plateau de commande (32) par rapport au moyeu (15).

11. Système caréné selon l'une quelconque des revendications 1 à 10,
**caractérisé en ce que** chaque patte (35) s'étend du plateau de commande vers un levier de pas.

12. Aéronef (1) muni d'une voilure tournante,
**caractérisé en ce que** ledit aéronef (1) comporte un système caréné (5) selon l'une quelconque des revendications 1 à 11.

13. Procédé de fabrication d'un système caréné (5) muni d'une carène (6), la carène (6) délimitant une veine (7), le système caréné (5) comprenant un rotor (10) disposé dans la carène (6) et mobile en rotation autour d'un axe d'entraînement (AXROT) par rapport à la carène (6), le rotor (10) comprenant plusieurs pales (11) portées par un moyeu (15), les pales (11) et le moyeu (15) étant mobiles conjointement en rotation autour de l'axe d'entraînement (AXROT) en rotation, chaque pale (11) ayant un degré de liberté en rotation par rapport au moyeu (15) autour d'un axe de pas (AXPAS) qui lui est propre, chaque pale (11) ayant une surface courante (12) profilée et un pied (13), ledit système caréné (5) comprenant un dispositif de modification (30) collectif du pas des pales, le dispositif de modification (30) collectif du pas des pales ayant un plateau de commande (32) mobile en rotation conjointement avec le moyeu (15) autour de l'axe d'entraînement (AXROT) et mobile en translation par rapport au moyeu (15) le long de l'axe d'entraînement (AXROT), le système caréné (5) comportant pour chaque pale une liaison mécanique (40), chaque liaison mécanique (40) comprenant une patte (35) solidaire du plateau de commande (32) ainsi qu'un levier de pas (17) du pied (13) d'une pale (11) et une liaison à rotule (41) reliant la patte (35) au levier de pas (17), le procédé comportant les étapes de :
- fixation d'un objectif à atteindre, les pales (11) étant équiréparties en azimut, ledit objectif à atteindre étant un objectif de portance que doit atteindre chaque pale (11) pour qu'au moins deux pales (11) génèrent une portance différente à un même azimut pour une même position particulière du plateau de commande (32) par rapport au moyeu (15),
- dimensionnement des liaisons mécaniques, la liaison mécanique d'au moins une des pales étant différente de la liaison mécanique d'au moins une autre des pales pour atteindre ledit objectif, chaque patte (35) comprenant un passage (36) traversé par une dite liaison à rotule (41), une distance axiale (D11, D12, D13) séparant le passage (36) de la patte du plateau de commande (32), la liaison mécanique d'au moins une des pales étant différente de la liaison mécanique d'au moins une autre des pales en ce qu'au moins une patte présente une distance axiale différente d'une distance axiale d'une autre patte
- fabrication du système caréné.

14. Procédé de fabrication d'un système caréné (5) muni d'une carène (6), la carène (6) délimitant une veine (7), le système caréné (5) comprenant un rotor (10) disposé dans la carène (6) et mobile en rotation autour d'un axe d'entraînement (AXROT) par rapport à la carène (6), le rotor (10) comprenant plusieurs pales (11) portées par un moyeu (15), les pales (11) et le moyeu (15) étant mobiles conjointement en rotation autour de l'axe d'entraînement (AXROT) en rotation, chaque pale (11) ayant un degré de liberté en rotation par rapport au moyeu (15) autour d'un axe de pas (AXPAS) qui lui est propre, chaque pale (11) ayant une surface courante (12) profilée et un pied (13), ledit système caréné (5) comprenant un dispositif de modification (30) collectif du pas des pales, le dispositif de modification (30) collectif du pas des pales ayant un plateau de commande (32) mobile en rotation conjointement avec le moyeu (15) autour de l'axe d'entraînement (AXROT) et mobile en translation par rapport au moyeu (15) le long de l'axe d'entraînement (AXROT), le système caréné (5) comportant pour chaque pale une liaison mécanique (40), chaque liaison mécanique (40) comprenant une patte (35) solidaire du plateau de commande (32) ainsi qu'un levier de pas (17) du pied (13) d'une pale (11) et une liaison à rotule (41) reliant la patte (35) au levier de pas (17), le procédé comportant les étapes de :
- fixation d'un objectif à atteindre, les pales (11) étant réparties différemment en azimut, ledit objectif à atteindre étant un objectif de portance à atteindre par chaque pale (11) pour que lesdites pales (11) génèrent une même portance à un même azimut pour une même position particulière du plateau de commande (32) par rapport au moyeu (15),
- dimensionnement des liaisons mécaniques, la liaison mécanique d'au moins une des pales étant différente de la liaison mécanique d'au moins une autre des pales pour atteindre ledit objectif, chaque patte (35) comprenant un passage (36) traversé par une dite liaison à rotule (41), une distance axiale (D11, D12, D13) séparant le passage (36) de la patte du plateau de commande (32), la liaison mécanique d'au moins une des pales étant différente de la liaison mécanique d'au moins une autre des pales en ce qu'au moins une patte présente une distance axiale différente d'une distance axiale d'une autre patte
- fabrication du système caréné.

## Patentansprüche

1. Stromlinienförmig verkleidetes System (5), das mit einer Verkleidung (6) versehen ist, wobei die Stromlinienform (6) einen Durchlass (7) begrenzt, wobei das stromlinienförmig verkleidete System (5) einen Rotor (10) umfasst, der in der Verkleidung (6) angeordnet und um eine Antriebsachse (AXROT) in Bezug auf die Verkleidung (6) drehbar ist, wobei der Rotor (10) mehrere von einer Nabe (15) getragene Blätter (11) umfasst, wobei die Blätter (11) und die Nabe (15) gemeinsam um die Antriebsachse (AXROT) drehbeweglich sind, wobei jedes Blatt (11) einen Freiheitsgrad der Drehung in Bezug auf die Nabe (15) um eine ihm eigene Anstellwinkelachse (AXPAS) hat, wobei jedes Blatt (11) eine profilierte Strömungsoberfläche (12) und einen Fuß (13) hat, wobei das stromlinienförmig verkleidete System (5) eine Vorrichtung (30) zur kollektiven Änderung des Anstellwinkels der Blätter umfasst, wobei die die Vorrichtung (30) zur kollektiven Änderung des Anstellwinkels der Blätter eine Steuerplatte (32) aufweist, die gemeinsam mit der Nabe (15) um die Antriebsachse (AXROT) drehbar und in Bezug auf die Nabe (15) entlang der Antriebsachse (AXROT) translatorisch beweglich ist, wobei das stromlinienförmig verkleidete System (5) für jedes Blatt (11) eine mechanische Verbindung (40)aufweist, wobei jede mechanische Verbindung (40) eine mit der Steuerplatte (32) fest verbundene Lasche (35) sowie einen Hebel (17) für den Anstellwinkel des Fußes (13) eines Blattes (11) umfasst, wobei die mechanische Verbindung mindestens eines der Blätter von der mechanischen Verbindung mindestens eines anderen der Blätter verschieden ist,
**dadurch gekennzeichnet, dass** jede mechanische Verbindung (40) eine Gelenkverbindung (41) umfasst, die die Lasche (35) mit dem Hebel (17) für den Anstellwinkel verbindet, dass jede Lasche (35) einen Durchgang (36) umfasst, durch den sich eine besagte Gelenkverbindung (41) erstreckt, wobei ein axialer Abstand (D 11, D12, D13) den Durchgang (36) der Lasche von der Steuerplatte (32) trennt, dass die mechanische Verbindung von mindestens einer der Laschen sich von der mechanischen Verbindung von mindestens einer anderen der Laschen dadurch unterscheidet, dass mindestens eine Lasche einen axialen Abstand aufweist, der sich von einem axialen Abstand einer anderen Lasche unterscheidet.

2. Stromlinienförmig verkleidetes System nach Anspruch 1,
**dadurch gekennzeichnet, dass** jeder Durchgang (36) eine kreisrunde Form aufweist, die auf einer Verbindungsachse (AXCTRL) zentriert ist, wobei der axiale Abstand (D11, D12, D13) die Verbindungsachse (AXCTRL) von der Steuerplatte (32) trennt.

3. Stromlinienförmig verkleidetes System nach einem der Ansprüche 1 bis 2,
**dadurch gekennzeichnet, dass** jeder Hebel (17) für den Anstellwinkel eine Öffnung (18) aufweist, durch die eine besagte Gelenkverbindung (41) verläuft, wobei ein radialer Abstand jede Öffnung (18) und die Anstellwinkelachse (AXPAS) des mit dieser Öffnung (18) versehenen Flügels (11) radial trennt, wobei mindestens ein Hebel (17) für den Anstellwinkel einen radialen Abstand (D21) aufweist, der sich von einem radialen Abstand (D22) eines anderen Hebels (17) für den Anstellwinkel unterscheidet.

4. Stromlinienförmig verkleidetes System nach Anspruch 3,
**dadurch gekennzeichnet, dass** jede Öffnung (18) eine kreisrunde Form aufweist, die auf einer Mittelachse (AXCOM) zentriert ist, wobei der radiale Abstand (D21, D22) die Mittelachse (AXCOM) von der Anstellwinkelachse (AXPAS) des mit dieser Öffnung (18) versehenen Blattes (11) trennt.

5. Stromlinienförmig verkleidetes System nach einem der Ansprüche 1 bis 4,
**dadurch gekennzeichnet, dass** die Strömungsoberflächen der Blätter identisch sind.

6. Stromlinienförmig verkleidetes System nach einem der Ansprüche 1 bis 2 und 5,
**dadurch gekennzeichnet, dass** die Füße der Blätter identisch sind.

7. Stromlinienförmig verkleidetes System nach einem der Ansprüche 1 bis 6,
**dadurch gekennzeichnet, dass** die Blätter (11) in Bezug auf die Antriebsachse (AXROT) azimutal gleichverteilt sind.

8. Stromlinienförmig verkleidetes System nach einem der Ansprüche 1 bis 6,
**dadurch gekennzeichnet, dass** die Blätter (11) in Bezug auf die Antriebsachse (AXROT) azimutal unterschiedlich verteilt sind.

9. Stromlinienförmig verkleidetes System nach einem der Ansprüche 1 bis 6 und 8,
**dadurch gekennzeichnet, dass** die mechanischen Verbindungen (40) so konfiguriert sind, dass die Blätter (11) bei einem gleichen Azimut für eine gleiche bestimmte Position der Steuerplatte (32) in Bezug auf die Nabe (15) einen gleichen Auftrieb erzeugen.

10. Stromlinienförmig verkleidetes System nach einem der Ansprüche 1 bis 7,
**dadurch gekennzeichnet, dass** die mechanischen Verbindungen so konfiguriert sind, dass mindestens zwei Blätter bei einem gleichen Azimut für eine gleiche bestimmte Position der Steuerplatte (32) in Bezug auf die Nabe (15) einen unterschiedlichen Auftrieb erzeugen.

11. Stromlinienförmig verkleidetes System nach einem der Ansprüche 1 bis 10,
**dadurch gekennzeichnet, dass** sich jede Lasche (35) von der Steuerplatte zu einem Anstellwinkelhebel erstreckt.

12. Luftfahrzeug (1) mit Drehflügel,
**dadurch gekennzeichnet, dass** das Luftfahrzeug (1) ein stromlinienförmig verkleidetes System (5) nach einem der Ansprüche 1 bis 11 aufweist.

13. Verfahren zum Herstellen eines stromlinienförmig verkleideten Systems (5), das mit einer Verkleidung (6) versehen ist, wobei die Verkleidung (6) einen Durchlass (7) begrenzt, wobei das stromlinienförmig verkleidete System (5) einen Rotor (10) umfasst, der in der Verkleidung (6) angeordnet und um eine Antriebsachse (AXROT) in Bezug auf die Verkleidung (6) drehbeweglich ist, wobei der Rotor (10) mehrere von einer Nabe (15) getragene Blätter (11) umfasst, wobei die Blätter (11) und die Nabe (15) gemeinsam um die Antriebsachse (AXROT) in Rotation beweglich sind, wobei jedes Blatt (11) einen Freiheitsgrad in Rotation in Bezug auf die Nabe (15) um eine ihm eigene Anstellwinkelachse (AXPAS) hat, wobei jedes Blatt (11) eine profilierte Strömungsoberfläche (12) und einen Fuß (13) hat, wobei das stromlinienförmig verkleidete System (5) eine Vorrichtung (30) zur kollektiven Änderung des Anstellwinkels der Blätter umfasst, wobei die Vorrichtung (30) zur kollektiven Änderung des Anstellwinkels der Blätter eine Steuerplatte (32) aufweist, die gemeinsam mit der Nabe (15) um die Antriebsachse (AXROT) drehbar und in Bezug auf die Nabe (15) entlang der Antriebsachse (AXROT) translatorisch beweglich ist, wobei das stromlinienförmig verkleidete System (5) für jedes Blatt eine mechanische Verbindung (40) aufweist, wobei jede mechanische Verbindung (40) eine Lasche (35), die fest mit der Steuerplatte (32) verbunden ist, sowie einen Anstellwinkelhebel (17) des Fußes (13) eines Blattes (11) und eine Gelenkverbindung (41), die die Lasche (35) mit dem Anstellwinkelhebel (17) verbindet, umfasst,
wobei das Verfahren die Schritte umfasst:
- Festlegen eines zu erreichenden Ziels, wobei die Blätter (11) im Azimut gleichverteilt sind, wobei das zu erreichende Ziel ein Zielauftrieb ist, den jedes Blatt (11) erreichen muss, damit mindestens zwei Blätter (11) bei einem gleichen Azimut für eine gleiche bestimmte Position der Steuerplatte (32) in Bezug auf die Nabe (15) einen unterschiedlichen Auftrieb erzeugen,
- Dimensionieren der mechanischen Verbindungen, um das Ziel zu erreichen, wobei sich die mechanische Verbindung mindestens eines der Blätter von der mechanischen Verbindung mindestens eines anderen der Blätter unterscheidet, wobei jede Lasche (35) einen Durchgang (36) umfasst, durch den eine besagte Gelenkverbindung (41) verläuft, wobei ein axialer Abstand (D 11, D12, D13) den Durchgang (36) der Lasche von der Steuerplatte (32) trennt, wobei sich die mechanische Verbindung mindestens einer der Laschen von der mechanischen Verbindung mindestens einer anderen der Laschen dadurch unterscheidet, dass mindestens eine Lasche einen axialen Abstand aufweist, der sich von einem axialen Abstand einer anderen Lasche unterscheidet,
Herstellen des stromlinienförmig verkleideten Systems.

14. Verfahren zum Herstellen eines stromlinienförmig verkleideten Systems (5), das mit einer Verkleidung (6) versehen ist, wobei die Verkleidung (6) einen Durchlass (7) begrenzt, wobei das stromlinienförmig verkleidete System (5) einen Rotor (10) umfasst, der in der Verkleidung (6) angeordnet ist und um eine Antriebsachse (AXROT) in Bezug auf die Verkleidung (6) drehbar ist, wobei der Rotor (10) mehrere von einer Nabe (15) getragene Blätter (11) umfasst, wobei die Blätter (11) und die Nabe (15) gemeinsam um die Antriebsachse (AXROT) drehbeweglich sind, wobei jedes Blatt (11) einen Freiheitsgrad der Drehung in Bezug auf die Nabe (15) um eine ihm eigene Anstellwinkelachse (AXPAS) hat, wobei jedes Blatt (11) eine profilierte Strömungsoberfläche (12) und einen Fuß (13) hat, wobei das stromlinienförmig verkleidete System (5) eine Vorrichtung (30) zur kollektiven Änderung des Blattanstellwinkels umfasst, wobei die Vorrichtung (30) zur kollektiven Änderung des Blattanstellwinkels eine Steuerplatte (32) aufweist, die zusammen mit der Nabe (15) um die Antriebsachse (AXROT) drehbar und in Bezug auf die Nabe (15) entlang der Antriebsachse (AXROT) translatorisch beweglich ist, wobei das stromlinienförmig verkleidete System (5) für jedes Blatt eine mechanische Verbindung (40) aufweist, wobei jede mechanische Verbindung (40) eine mit der Steuerplatte (32) fest verbundene Lasche (35) sowie einen Hebel (17) für den Anstellwinkel des Fußes (13) eines Blattes (11) und eine Gelenkverbindung (41) umfasst, die die Lasche (35) mit dem Hebel für den Anstellwinkel (17) verbindet,
wobei das Verfahren die Schritte umfasst:
- Festlegen eines zu erreichenden Ziels, wobei die Blätter (11) azimutal unterschiedlich verteilt sind, wobei das zu erreichende Ziel ein Zielauftrieb ist, den jedes Blatt (11) erreichen muss, damit die Blätter (11) bei einem gleichen Azimut für eine gleiche bestimmte Position der Steuerplatte (32) in Bezug auf die Nabe (15) einen gleichen Auftrieb erzeugen,
- Dimensionieren der mechanischen Verbindungen, um das Ziel zu erreichen, wobei sich die mechanische Verbindung mindestens eines der Blätter von der mechanischen Verbindung mindestens eines anderen der Blätter unterscheidet, wobei jede Lasche (35) einen Durchgang (36) umfasst, durch den eine besagte Gelenkverbindung (41) verläuft, wobei ein axialer Abstand (D11, D12, D13) den Durchgang (36) der Lasche von der Steuerplatte (32) trennt, wobei sich die mechanische Verbindung mindestens einer der Laschen von der mechanischen Verbindung mindestens einer anderen der Laschen dadurch unterscheidet, dass mindestens eine Lasche einen axialen Abstand aufweist, der sich von einem axialen Abstand einer anderen Lasche unterscheidet,
Herstellen des stromlinienförmig verkleideten Systems.

## Claims

1. Shroud system (5) provided with a shroud (6), said shroud (6) delimiting a duct (7), said shroud system (5) comprising a rotor (10) arranged in the shroud (6) and movable in rotation about a drive axis (AXROT) with respect to the shroud (6), said rotor (10) comprising several blades (11) carried by a hub (15), said blades (11) and the hub (15) being jointly movable in rotation about the drive axis (AXROT), each blade (11) having one degree of freedom in rotation relative to the hub (15) about its own pitch axis (AXPAS), each blade (11) having a profiled running surface (12) and a foot (13), said shroud system (5) comprising a device (30) for collective modification of the pitch of the blades, said device (30) for collective modification of the pitch of the blades having a control plate (32) movable in rotation jointly with the hub (15) about the drive axis (AXROT) and movable in translation relative to the hub (15) along the drive axis (AXROT), said shroud system (5) comprising for each blade (11) a mechanical connection (40), each mechanical connection (40) comprising a lug (35) integral with the control plate (32) and a pitch lever (17) of the foot (13) of a blade (11), the mechanical connection of at least one of the blades being different from the mechanical connection of at least one other of the blades, **characterised in that** each mechanical connection (40) comprises a ball-joint (41) connecting the lug (35) to the pitch lever (17), each lug (35) comprises a passage (36) traversed by such a ball-joint (41), an axial distance (D11, D12, D13) separates the passage (36) from the lug of the control plate (32), and the mechanical connection of at least one of the blades is different from the mechanical connection of at least one other of the blades **in that** at least one lug has an axial distance different from an axial distance of another lug.

2. Shroud system according to claim 1,
**characterised in that** each passage (36) has a circular shape centred on a connection axis (AXCTRL), said axial distance (D11, D12, D13) separating the connection axis (AXCTRL) from the control plate (32).

3. Shroud system according to any one of claims 1 to 2,
**characterised in that** each pitch lever (17) comprises an orifice (18) traversed by a said ball-joint (41), a radial distance radially separating each orifice (18) and the pitch axis (AXPAS) of the blade (11) provided with said orifice (18), and at least one pitch lever (17) has a radial distance (D21) different from a radial distance (D22) of another pitch lever (17).

4. Shroud system according to claim 3,
**characterised in that** each orifice (18) has a circular shape centred on a central axis (AXCOM), said radial distance (D21, D22) separating the central axis (AXCOM) from the pitch axis (AXPAS) of the blade (11) provided with said orifice (18).

5. Shroud system according to any one of claims 1 to 4,
**characterised in that** the running surfaces of the blades are identical.

6. Shroud system according to any one of claims 1, 2 and 5,
**characterised in that** the feet of the blades are identical.

7. Shroud system according to any one of claims 1 to 6,
**characterised in that** said blades (11) are distributed uniformly in azimuth with respect to the drive axis (AXROT).

8. Shroud system according to any one of claims 1 to 6,
**characterised in that** said blades (11) are distributed differently in azimuth with respect to the drive axis (AXROT).

9. Shroud system according to any one of claims 1, 6 and 8,
**characterised in that** said mechanical links (40) are configured so that said blades (11) generate the same lift at the same azimuth for the same particular position of the control plate (32) with respect to the hub (15).

10. Shroud system according to any one of claims 1 to 7,
**characterised in that** said mechanical connections are configured so that at least two blades generate a different lift at the same azimuth for the same particular position of the control plate (32) with respect to the hub (15).

11. Shroud system according to any one of claims 1 to 10,
**characterised in that** each lug (35) extends from the control plate towards a pitch lever.

12. Aircraft (1) equipped with rotor blades,
**characterised in that** said aircraft (1) comprises a shroud system (5) according to any one of claims 1 to 11.

13. Method for manufacturing a shroud system (5) provided with a shroud (6), said shroud (6) delimiting a duct (7), said shroud system (5) comprising a rotor (10) arranged in the shroud (6) and movable in rotation about a drive axis (AXROT) with respect to the shroud (6), said rotor (10) comprising several blades (11) carried by a hub (15), said blades (11) and the hub (15) being jointly movable in rotation about the drive axis (AXROT), each blade (11) having one degree of freedom in rotation relative to the hub (15) about its own pitch axis (AXPAS), each blade (11) having a profiled running surface (12) and a foot (13), said shroud system (5) comprising a device (30) for collective modification of the pitch of the blades, said device (30) for collective modification of the pitch of the blades having a control plate (32) movable in rotation jointly with the hub (15) about the drive axis (AXROT) and movable in translation relative to the hub (15) along the drive axis (AXROT), said shroud system (5) comprising for each blade a mechanical connection (40), each mechanical connection (40) comprising a lug (35) integral with the control plate (32) and a pitch lever (17) of the foot (13) of a blade (11) and a ball-joint (41) connecting the lug (35) to the pitch lever (17), said method comprising the following steps:
- setting of an objective to be achieved, the blades (11) being uniformly distributed in azimuth, said objective to be achieved being a lift objective to be achieved by each blade (11) in order for at least two blades (11) to generate a different lift at the same azimuth for the same particular position of the control plate (32) with respect to the hub (15),
- dimensioning of the mechanical connections, the mechanical connection of at least one of the blades being different from the mechanical connection of at least one other of the blades in order to achieve said objective, each lug (35) comprising a passage (36) traversed by a said ball-joint (41), an axial distance (D11, D12, D13) separating the passage (36) from the lug of the control plate (32), the mechanical connection of at least one of the blades being different from the mechanical connection of at least one other of the blades in that at least one lug has an axial distance different from an axial distance of another lug,
- manufacture of the shroud system.

14. Method for manufacturing a shroud system (5) provided with a shroud (6), said shroud (6) delimiting a duct (7), said shroud system (5) comprising a rotor (10) arranged in the shroud (6) and movable in rotation about a drive axis (AXROT) with respect to the shroud (6), said rotor (10) comprising several blades (11) carried by a hub (15), said blades (11) and the hub (15) being jointly movable in rotation about the drive axis (AXROT), each blade (11) having one degree of freedom in rotation relative to the hub (15) about its own pitch axis (AXPAS), each blade (11) having a profiled running surface (12) and a foot (13), said shroud system (5) comprising a device (30) for collective modification of the pitch of the blades, said device (30) for collective modification of the pitch of the blades having a control plate (32) movable in rotation jointly with the hub (15) about the drive axis (AXROT) and movable in translation relative to the hub (15) along the drive axis (AXROT), said shroud system (5) comprising for each blade (11) a mechanical connection (40), each mechanical connection (40) comprising a lug (35) integral with the control plate (32) and a pitch lever (17) of the foot (13) of a blade (11) and a ball-joint (41) connecting the lug (35) to the pitch lever (17), said method comprising the following steps:
- setting of an objective to be achieved, the blades (11) being uniformly distributed in azimuth, said objective to be achieved being a lift objective to be achieved by each blade (11) in order for said two blades (11) to generate the same different lift at the same azimuth for the same particular position of the control plate (32) with respect to the hub (15),
- dimensioning of the mechanical connections, the mechanical connection of at least one of the blades being different from the mechanical connection of at least one other of the blades in order to achieve said objective, each lug (35) comprising a passage (36) traversed by a said ball-joint (41), an axial distance (D11, D12, D13) separating the passage (36) from the lug of the control plate (32), the mechanical connection of at least one of the blades being different from the mechanical connection of at least one other of the blades in that at least one lug has an axial distance different from an axial distance of another lug,
- manufacture of the shroud system.
